# EUROPEAN PATENT APPLICATION

(11) **EP 4 650 407 A1**
(43) Date of publication of application: **19.11.2025**
(21) Application number: 25182495.9
(22) Date of filing: 07.06.2023
(51) Int. Cl.: C09D 175/02, C08G 18/38, C08G 18/79, C08L 75/02

(54) **SILICONE-MODIFIED POLYUREA COATING COMPOSITIONS**

(30) Priority: 09.06.2022 US 202263366103 P
(62) Divisional of application: 23736575.4
(71) Applicant: PPG Industries Ohio, Inc., Cleveland, OH 44111 (US)
(72) Inventor: HUI, Chinming, Cleveland, OH 44111 (US); MILLERO, Edward R., Jr., Cleveland, OH 44111 (US); BENNETT, John M., Cleveland, OH 44111 (US); TREVINO SUAREZ DEL REAL, Patricia Olivia, Cleveland, OH 4111 (US); SCHMIDT, David J., Cleveland, OH 4111 (US); JOHNSON, Chandler L., Cleveland, OH 4111 (US); WARREN, Wells B., III, Cleveland, OH 4111 (US); SAHA, Gobinda, Cleveland, OH 4111 (US); ISHMAEL, William Earl, Jr., Cleveland, OH 4111 (US); PELL, Matthew, Cleveland, OH 4111 (US)
(74) Representative: Appleyard Lees IP LLP

(57) **Abstract**

Coating compositions may combine durability and stain resistance with reduced environmental emissions and health risks. A coating composition may comprise an isocyanate component; an amine-functional resin comprising an aspartic amine; a reactive silicone component having a molecular weight of at least of 500; TiO₂; a cure retardant in an amount of at least 5 wt. %; and a solvent in an amount of up to 20 wt. %

## Description

### CROSS-REFERENCE TO RELATED APPLICATIONS

This application claims priority to U.S. Provisional Application No. 63/366,103, filed June 9, 2022, which is incorporated herein by reference in its entirety for all purposes.

### FIELD

Described herein are coating compositions for applying to a substrate and methods of coating substrates.

### BACKGROUND

Molded substrates such as swimming pools, bathtubs, turbine blades, marine components, precast concrete, and prefabricated construction components may be susceptible to damage such as cracking and chipping due to the brittle nature of some polymeric materials used in one or more layers of the substrate. The appearance of molded substrates made from conventional polymeric materials may stain or otherwise be diminished from exposure to chemical materials and environmental conditions.

### SUMMARY

The present disclosure is directed to coating compositions. A coating composition may comprise an isocyanate component; an amine-functional resin comprising an aspartic acid ester; a reactive silicone component having a molecular weight of at least of 500; and TiO₂ in an amount of at least 5 wt. %. A coating composition may comprise an isocyanate component; an amine-functional resin comprising an aspartic acid ester; a reactive silicone component having a molecular weight of at least of 500; TiO₂ in an amount of at least 5 wt. %; a cure retardant in an amount of at least 5 wt. %; and a solvent in an amount of up to 20 wt. %.

The present disclosure is further directed to methods for coating a substrate and repairing an article. A method may comprise applying to at least a portion of the substrate a coating composition described herein. A method for repairing an article comprising a first coating may comprise applying a coating composition described herein to at least a portion of the article.

### BRIEF DESCRIPTION OF FIGURES

FIG. 1 is a schematic of an open molding process.
FIG. 2 is a schematic of a closed molding process.

### DETAILED DESCRIPTION

Provided herein are coating compositions and methods that can be applied to substrates for improved performance. The present disclosure relates to polyurea coating compositions that can combine durability and stain resistance with reduced environmental emissions and health risks. Unlike conventional unsaturated polyester coatings, the coating compositions described herein may be free of peroxide and free of volatile organic chemicals (VOCs). In some cases, the coating compositions described herein can form quickly and enable application using automated processes, which can result in lower costs and improved product quality.

Conventional coatings such as polyester and epoxy coatings can have poor impact resistance, experience high levels of shrinkage, and/or fail to prevent or minimize staining. The polyurea coating compositions described herein may demonstrate extended durability and desirable properties such as stain resistance, impact resistance, and low shrinkage, while providing a high gloss finish with UV protection.

Described herein are polyurea coating compositions that may comprise an isocyanate component; an amine-functional resin comprising an aspartic acid ester; a reactive silicone component having a molecular weight of at least of 500; and TiO₂. The coating compositions may further comprise a reactive diluent. The coating compositions may further comprise a non-reactive surface additive. The coating compositions may have an equivalent weight ratio of the isocyanate component to the active hydrogen of the amine-functional resin ranges from 0.85:1 to 1.4:1. The amine-functional resin may comprise a primary and/or secondary amine. The amine-functional resin may comprise an aromatic amine or an aliphatic amine. The isocyanate component may comprise a prepolymer formed from isophorone diisocyanate and a polyether polyol and/or polyetheramine. The coating compositions may be 2K with the isocyanate component separated from the amine-functional resin until ready to be applied to a substrate. The coating composition may be a gelcoat.

The coating compositions described herein may comprise an amine-functional resin comprising an aspartic acid ester. Suitable polyamines are numerous and can vary widely. Such polyamines can include those that are known in the art. Non-limiting examples of suitable polyamines can include but are not limited to primary and secondary amines, and mixtures thereof, such as any of those listed herein. Amine terminated polyureas may also be used. Amines comprising tertiary amine functionality can be used provided that the amine further comprises at least two primary and/or secondary amino groups. In some cases, the isocyanate functional prepolymer may comprise a polyamine and the ratio of equivalents of isocyanate groups (NCOs) to equivalents of amine groups (NHs) can be greater than 0.85. In some cases, the isocyanate functional prepolymer may comprise a polyamine and the ratio of equivalents of isocyanate groups (NCOs) to equivalents of amine groups (NHs) can be greater than 1.

The amine may include, for example, monoamines, or polyamines having at least two functional groups such as di-, tri-, or higher functional amines; and mixtures thereof. The amine may be aromatic or aliphatic such as cycloaliphatic, or mixtures thereof. Non-limiting examples of suitable monoamines can include aliphatic polyamines such as, but not limited to, ethylamine, isomeric propylamines, butylamines, pentylamines, hexylamines, cyclohexylamine, and benzylamine. Suitable primary polyamines include, but are not limited to, ethylene diamine, 1,2-diaminopropane, 1,4-diaminobutane, 1,3-diaminopentane (DYTEK^{®} EP, Invista), 1,6-diaminohexane, 2-methyl-1,5-pentane diamine (DYTEK^{®} A, Invista), 2,5-diamino-2,5-dimethylhexane, 2,2,4- and/or 2,4,4-trimethyl-1,6-diamino-hexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluoylene diamine, 2,4'-diaminodicyclohexyl methane, 4,4'-diaminodicyclohexyl methane (PACM-20, Air Products) and 3,3'-dialkyl-4,4'-diaminodicyclohexyl methanes (such as 3,3'-dimethyl-4,4'-diaminodicyclohexyl methane (DIMETHYL DICYKAN or LAROMIN^{®} C260, BASF; ANCAMINE^{®} 2049, Air Products) and 3,3'-diethyl-4,4'-diaminodicyclohexyl methane), 2,4- and/or 2,6-diaminotoluene, 3,5-diethyltoluene-2,4-diamine, 3,5-diethyltoluene-2,6-diamine, 3,5-dimethylthio-2,4-toluenediamine, 3,5-dimethylthio-2,4-toluenediamine, 2,4'- and/or 4,4'-diaminodiphenyl methane, dipropylene triamine, bis hexamethylene triamine, or combinations thereof. Polyoxyalkyleneamines are also suitable. Polyoxyalkyleneamines comprise two of more primary or secondary amino groups attached to a backbone, derived, for example, from propylene oxide, ethylene oxide, butylene oxide or a mixture thereof. Examples of such amines include those available under the designation JEFFAMINE^{®}, such as, without limitation, JEFFAMINE^{®} D-230, D-400, D-2000, HK-511, ED-600, ED-900, ED-2003, T-403, T-3000, T-5000, SD-231, SD-401, SD-2001, and ST-404 (Huntsman Corporation). Such amines may have an approximate molecular weight ranging from 200 to 7500.

Secondary cycloaliphatic diamines may also be used in the coating composition described herein. Suitable cycloaliphatic diamines include, without limitation, JEFFLINK^{®} 754 (Huntsman Corporation), CLEARLINK^{®} 1000 (Dorf-Ketal Chemicals, LLC), and aspartic ester functional amines, such as those available under the name DESMOPHEN^{®} such as DESMOPHEN^{®} NH1220, DESMOPHEN^{®} NH 1420, and DESMOPHEN^{®} NH 1520 (Covestro LLC, Pittsburgh, PA). Other suitable secondary amines include the reaction products of materials comprising primary amine functionality, such as those described herein, with acrylonitrile. For example, the secondary amine can be the reaction product of 4,4'-diaminodicyclohexylmethane and acrylonitrile. Alternatively, the secondary amine can be the reaction product of isophorone diamine and acrylonitrile, such as POLYCLEAR^{™} 136 (available from BASF/Hanson Group LLC).

The coating compositions described herein may comprise an isocyanate component. As used herein, the term "isocyanate" includes unblocked isocyanate compounds capable of forming a covalent bond with a reactive group such as a hydroxyl, thiol or amine functional group. Thus, isocyanate can refer to "free isocyanate", which will be understood to those skilled in the art. The isocyanate may be monofunctional (containing one isocyanate functional group (NCO)). The isocyanate may be polyfunctional (containing two or more isocyanate functional groups (NCOs)). The isocyanate may be blocked. Combinations of any isocyanates and/or isocyanate functional prepolymers can be used in the coating compositions described herein.

Suitable isocyanates are numerous and can vary widely. Such isocyanates can include those that are known in the art. Non-limiting examples of suitable isocyanates can include monomeric and/or polymeric isocyanates. The isocyanates can be selected from monomers, prepolymers, oligomers, or blends thereof. The isocyanate may be C₂-C₂₀ linear, branched, cyclic, aromatic, aliphatic, or combinations thereof.

Suitable isocyanates may include but are not limited to isophorone diisocyanate (IPDI), which is 3,3,5-trimethyl-5-isocyanato-methyl-cyclohexyl isocyanate; hydrogenated materials such as cyclohexylene diisocyanate, 4,4'-methylenedicyclohexyl diisocyanate (H12MDI); mixed aralkyl diisocyanates such as tetramethylxylyl diisocyanates, OCN-C(CH3)2-C6H4C(CH3)2-NCO; polymethylene isocyanates such as 1,4-tetramethylene diisocyanate, 1,5-pentamethylene diisocyanate, 1,6-hexamethylene diisocyanate (HMDI), 1,7-heptamethylene diisocyanate, 2,2,4- and 2,4,4-trimethylhexamethylene diisocyanate, 1,10-decamethylene diisocyanate and 2-methyl-1,5-pentamethylene diisocyanate; and mixtures thereof.

Non-limiting examples of aromatic isocyanates for used in the coating compositions described herein may include but are not limited to phenylene diisocyanate, toluene diisocyanate (TDI), xylene diisocyanate, 1,5-naphthalene diisocyanate, chlorophenylene 2,4-diisocyanate, bitoluene diisocyanate, dianisidine diisocyanate, tolidine diisocyanate, alkylated benzene diisocyanates, methylene-interrupted aromatic diisocyanates such as methylenediphenyl diisocyanate, 4,4'-isomer (MDI) including alkylated analogs such as 3,3'-dimethyl-4,4'-diphenylmethane diisocyanate, polymeric methylenediphenyl diisocyanate; and mixtures thereof.

Isocyanate monomer may be used. Without wishing to be bound by theory, it is believed that the use of an isocyanate monomer (i.e., residual-free monomer from the preparation of prepolymer) may decrease the viscosity of the polyurea composition thereby improving its flowability, and may provide improved adhesion of the polyurea coating to a previously applied coating and/or to an uncoated substrate. In some cases, at least 1 wt. %, or at least 2 wt. % or at least 4 wt. % of the isocyanate component may comprise at least one isocyanate monomer.

The isocyanate can include oligomeric isocyanate such as but not limited to dimers such as the uretdione of 1,6-hexamethylene diisocyanate, trimers such as the biuret and isocyanurate of 1,6-hexanediisocyanate and the isocyanurate of isophorone diisocyanate, allophonates and polymeric oligomers. Modified isocyanates can be used, including but not limited to carbodiimides and uretone-imines, and mixtures thereof. Suitable materials include, without limitation, those available under the designation DESMODUR^{®} (Covestro LLC, Pittsburgh, PA) and include DESMODUR^{®} N 3200, DESMODUR^{®} N 3300, DESMODUR^{®} N 3400, DESMODUR^{®} XP 2410 and DESMODUR^{®} XP 2580.

The isocyanate component may comprise an isocyanate functional prepolymer formed from a reaction mixture comprising an isocyanate and another material. Any isocyanate known in the art, such as any of those described above, can be used in the formation of the prepolymer. For example, the isocyanate component may comprise a prepolymer formed from isophorone diisocyanate and a polyether polyol and/or polyetheramine according to the process described in US 8,691,929 (Example 1). As used herein, an "isocyanate functional prepolymer" refers to the reaction product of isocyanate with polyamine and/or other isocyanate reactive group such as polyol; the isocyanate functional prepolymer has at least one isocyanate functional group (NCO).

The coating compositions may comprise an equivalent weight ratio of the isocyanate component to the active hydrogen of the amine-functional resin of from 0.85:1 to 1.4:1 (e.g., 0.95:1, 1.1:1 or 1.25:1). The compositions may comprise an equivalent weight ratio of the isocyanate component to the active hydrogen of the amine-functional resin of 0.85:1, 0.88:1, 0.9:1, 0.92:1, 0.94:1, 0.95:1, 0.96:1, 0.98:1, 1:1, 1.01:1, 1.02:1, 1.04:1, 1.05:1, 1.06:1, 1.08:1, 1.1:1, 1.12:1, 1.14:1, 1.15:1, 1.16:1, 1.18:1, 1.2:1, 1.22:1, 1.24:1, 1.25:1, 1.26:1, 1.28:1, 1.3:1, 1.32:1, 1.34:1, 1.35:1, 1.36:1, 1.38:1, or 1.4:1.

The coating compositions described herein may comprise a reactive silicone component in an amount of up to 7 wt. % (e.g., up to 4 wt. %, up to 5 wt. %, or up to 6 wt. %). The compositions may include 0.5 %, 1 %, 1.5 %, 2 %, 2.5 %, 3 %, 3.5 %, 4 %, 4.5 %, 5 %, 5.5 %, 6 %, 6.5 % or 7 % of a reactive silicone component. All percentages of reactive silicone component are expressed in wt. % based on the total solid weight of the composition. The reactive silicone component may comprise an amine functional silicone, a hydroxyl functional silicone, or combinations thereof. The reactive silicone component may comprise an aminofunctional methyl phenyl silicone resin. The reactive silicone component may comprise a hydroxy alkyl polydimethylsiloxane. The reactive silicone component may have molecular weight of at least 500 atomic mass units (amu) (e.g., at least 1000 amu, at least 2500 amu, at least 4300 amu). The reactive silicone component may have molecular weight of at least 500, 600, 700, 800, 900, 1000, 1100, 1200, 1300, 1400, 1500, 1600, 1700, 1800, 1900, 2000, 2250, 2500, 2750, 3000, 3250, 3500, 3750, 4000, 4250, 4500, 4750, 5000, 5500, 6000, 6500, 7000, 7500, 8000, 8500, 9000, 9500, 10,000, 10,500, 11,000, 11,500 or 12,000 amu. The reactive silicone component may include a plurality of functional groups. For example, the reactive silicone component may include at least two functional groups, three functional groups, or four functional groups. Non-limiting examples include Silmer^{®} OHT Di-10 and Silmer^{®} HS 2000 (Siltech Corporation), and Tego^{®} Protect 5000N (Evonik Industries). The reactive silicone component may have at least one reactive functional group that is reactive toward isocyanate, amine, and/or hydroxy groups. The reactive silicone component may have at least one reactive functional group that is reactive toward isocyanate, amine, and/or hydroxy groups and have a functional group equivalent weight that is greater than 500 amu. The reactive silicone component may have at least two reactive moieties (e.g., at least 2, at least 3, or at least 4 reactive moieties).

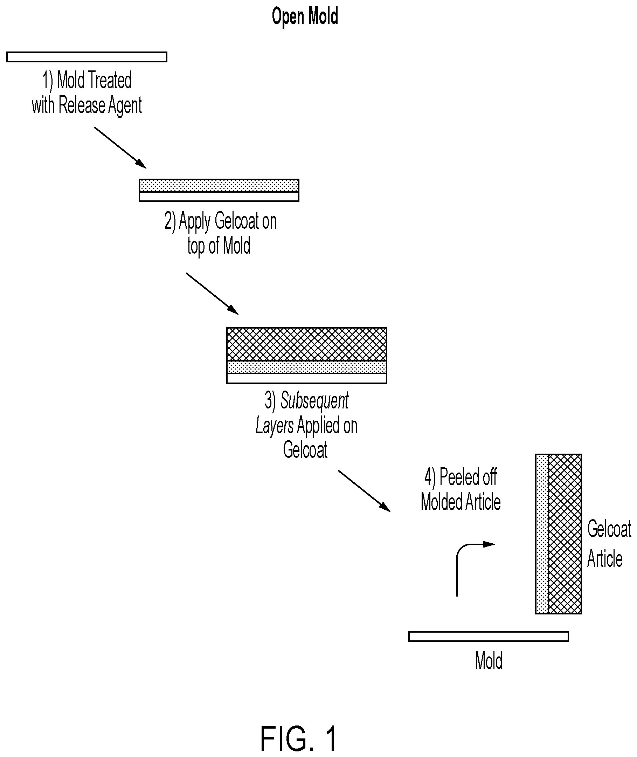

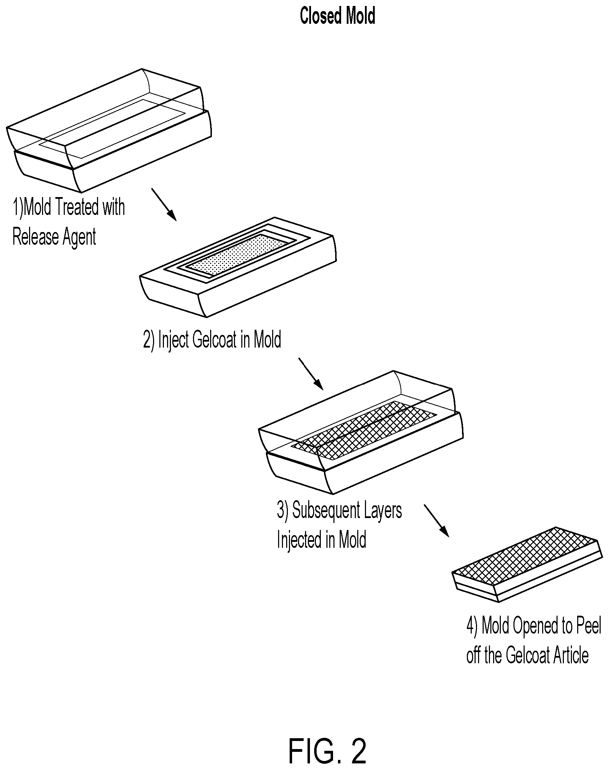

In some cases, the coating compositions described herein may be used in a molding process. FIGS. 1 and 2 show exemplary molding processes. The mold may be an open mold, where the coating and any subsequent layers are applied to the top of the mold. The mold may be a closed mold, where the coating and any subsequent layers are injected, sprayed, or otherwise applied into a multi-part mold. A release agent, which may be made of silicone or wax, may be applied to the mold following its technical data sheet. The coating composition and subsequent layers can then be applied to the treated mold.

Unlike typical coating processes, the finished product side of a molded product is at the interface of the coating and the mold, to be revealed upon release of the product from the mold. The reactive silicone additive having a larger molecular weight used in the coating compositions described herein may allow for the silicone additive to react and remain at the mold/coating interface rather than migrate to the interface of the coating and air. This migration may be desirable in typical coating processes where the air/coating interface is the finished product side. Migration in the molding processes described herein may place silicone at the surface to be further processed with the addition of subsequent structural or composite layers. Migration of silicone in molded products can be undesirable. In some cases, subsequent structural or composite layers added to the coating compositions herein may have improved adhesion due to the silicone additive remaining at the mold/coating interface. A finished molded product may have greater stain resistance due to the silicone additive not migrating to the air interface and remaining at the mold/coating interface, which becomes the finished side of the product once the article is released from the mold. In some cases, the silicone additive may aid in the release of a finished molded product from the mold.

The coating compositions described herein may comprise TiO₂. TiO₂ may be present in an amount of at least 1 wt. % (e.g., at least 8 wt. %, at least 15 wt. %, at least 25 wt. %). The compositions may include 1 %, 1.5 %, 2 %, 2.5 %, 3 %, 3.5 %, 4 %, 4.5 %, 5 %, 5.5 %, 6 %, 6.5 %, 7 %, 7.5 %, 8 %, 8.5 %, 9 %, 9.5 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, or 30 % of TiO₂. All percentages of TiO₂ are expressed in wt. % based on the total solid weight of the composition.

The coating compositions described herein may further comprise a reactive diluent. Reactive diluents may include 1 to 4 functional groups comprising amine, epoxy, carbonate, acrylate and/or silane functional groups. The reactive diluent may comprise 2-ethylhexyl glycidyl ether, glycidyl esters of neodecanoic acids, 3,4-epoxycyclohexylmethyl-3',4'-epoxycyclohexane carboxylate, a cardanol-based diluent, an epoxy bio-based oil reactive diluent, propylene carbonate, 1,6-hexanediol diacrylate, butylacrylate, ethyhexylacrylate, methacrylate, methyl methacrylate, vinyltrimethoxy silane, dimethylsiloxane-vinylmethylsiloxane-(propylene oxide-ethylene oxide) block copolymer, tetraethyl orthosilicate, or combinations thereof. The reactive diluent may be added to the amine-functional resin or the isocyanate component.

The reactive diluent can modify the viscosity of the coating components to provide a low pressure differential for intermittent application (start/stop) processes applying a 2K coating composition with substantially equal mixing, including automated or robotic operations having trigger on/off spray. For example, the reactive diluent can be added to the amine-functional resin to modify the viscosity to provide for similar spray conditions for the amine and isocyanate portions of the polyurea coating. The isocyanate component can be used alone or optionally diluted with a reactive diluent to achieve the optimal spray pressure. In some cases, the pressure differential may be less than 400 psi (e.g., less than 350 psi, less than 300 psi, or less than 250 psi).

The coating compositions may further comprise a catalyst compound comprising a metal compound, a mixed metal compound, an organometallic compound and/or organic compound. The metal compound, mixed metal compound, and/or organometallic compound may comprise tin, zinc, bismuth, zirconium, manganese, titanium, cobalt, iron, or lead. The organic compound may comprise bicycloguanidine, an imidazole, an acid, an aliphatic amine, cyclic amine, a phosphonium salt, a phenolic acid, a phenolic salt, a sulphonic acid, a sulphonic salt, a tertiary amine or a quaternary ammonium salt. In some examples, the catalyst compound may comprise less than 1 wt. % of the composition based on total solid weight of the composition (e.g., up to 0.8 wt. %, up to 0.5 wt. %, or up to 0.2 wt. %). The compositions may include 0.1 %, 0.2 %, 0.3 %, 0.4 %, 0.5 %, 0.6 %, 0.7 %, 0.8 %, 0.9 %, or up to 1 % of the catalyst compound. All percentages of the catalyst compound are expressed in wt. % based on the total solid weight of the composition. Optionally, the organometallic compound may comprise dibutyltin dilaurate (DBDL) and/or dibutyltin diacetate (DBDA). In some examples, the composition may be free of an organometallic or organotin compound. In some examples, the organic catalyst may comprise a tertiary amine such as 1,8 diazabicylco-5,4,0-undecene-7 (DBU) and/or an acid such as acetic acid.

The coating compositions may further comprise non-reactive surface additives in an amount up to 3 wt. % (e.g., up to 1.5 wt. % or up to wt. 2 %). The composition may include 0.3 %, 0.4 %, 0.5 %, 0.6 %, 0.7 %, 0.8 %, 0.9 %, 1 %, 1.1 %, 1.2 %, 1.3 %, 1.4 %, 1.5 %, 1.6 %, 1.7 %, 1.8 %, 1.9 %, 2 %, 2.1 %, 2.2 %, 2.3 %, 2.4 %, 2.5 %, 2.6 %, 2.7 %, 2.8 %, 2.9 %, or 3 % non-reactive surface additives. All percentages of non-reactive surface additives are expressed in wt. % based on the total solid weight of the composition. The non-reactive surface additives may comprise a defoamer, a wetting agent, a dispersing agent, or combinations thereof. In some cases, the coating composition may be free of non-reactive surface additives.

The coating compositions may further comprise a polysiloxane, a UV absorber, a hindered amine light stabilizer (HALS), an inorganic filler, an organic filler, a reinforcing agent, a pigment, a flame retardant, a biocide, an antimicrobial, or combinations thereof. The coating compositions may comprise silicate minerals, metal oxides, metal salts, clay, natural and synthetic fibrous minerals, carbon black, melamine, rosin, cyclopentadienyl resins, or combinations thereof. For example, the coating composition may comprise calcium carbonate, silica, fumed silica, mica, glass, glass beads, aluminum tri-hydrate, gypsum, wollastonite, phosphorus, calcium sulfate, magnesium hydroxide, an organic clay derivative or combinations thereof.

The coating compositions described herein may optionally comprise a cure retardant and a solvent. The coating compositions described herein may be a 1K composition. A blocked isocyanate and/or blocked amine may be used to make a 1K composition. The cure retardant and solvent may provide for a longer work time by slowing the reaction of the polyurea coating composition. In some cases, the composition may have a potlife of greater than 15 min (e.g., greater than 20 min, greater than 30 min, greater than 40 min). As used herein, potlife is the time from when the components of the composition are combined to the time at which the mixed composition is no longer workable. The compositions may have a potlife greater than 15, 16, 17, 18, 19, 20, 21, 22, 23, 24, 25, 26, 27, 28, 29, 30, 31, 32, 33, 34, 35, 36, 37, 38, 39, or 40 min.

The cure retardant may be present in an amount of at least 5 wt. % (e.g., at least 5 wt. %, at least 10 wt. % or at least 25 wt. %). The compositions may include at least 5 %, 6 %, 7 %, 8%, 9%, 10%, 11 %, 12 %, 13 %, 14 %, 15 %, 16 %, 17 %, 18 %, 19 %, 20 %, 25 %, 30 %, 35 %, 40 %, 45 %, 50 %, 55 %, 60 %, 65 %, 70 %, or 75 % cure retardant. All percentages of cure retardant are expressed in wt. % based on the total solid weight of the composition. The cure retardant may comprise a ketone, a pyrazole, a polyol, or combinations thereof. For example, the cure retardant may comprise acetone, acetylacetone, 3,5-dimethylpyrazole, or combinations thereof. The cure retardant may comprise tetra (2-hydroxypropyl) ethylenediamine, polytetramethylene ether glycol, or combinations thereof.

The solvent may be present in an amount of up to 20 wt. % (e.g., up to 5 wt. %, up to 13 wt. %, or up to wt. 17%). The compositions may include up to 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 % , or 20 % solvent. All percentages of solvent are expressed in wt. % based on the total solid weight of the composition. The solvent may comprise an aromatic hydrocarbon, a carboxylic acid ester, or combinations thereof. For example, the solvent may comprise naptha, butyl acetate, xylene, or combinations thereof.

A substrate may include a coating composition as described herein. An article may comprise a substrate including a coating composition as described herein. Non-limiting examples of an article include consumer products such as a bathtub, swimming pool, or spa as well as industrial and commercial products such as turbine blades, prefabricated components, boats, and other products used in marine, transportation, wind energy, and construction sectors. Other non-limiting examples of an article include parts and accessories for transportation and automotive sectors.

Also disclosed herein are methods for coating a substrate. Examples of suitable substrates may include metal, plastic, concrete, cement, asphalt, wood, geotextile, a fiberglass composite, carbon fiber composite, and/or synthetic fiber composite. In some examples, the metal substrate may comprise iron, steel, steel alloys, galvanized metals, and/or aluminum. In some examples, the plastic substrate may comprise a polyurethane, an epoxy, and/or a polyurea. In some examples, the synthetic fibers may comprise acetate, acrylic, nylon, aramide, polyolefin, ceramic, and/or polyester fibers. A method of coating a substrate may comprise applying to at least a portion of a substrate the coating composition described herein.

Optionally, the method may further comprise adding a mold release composition to the substrate prior to applying the coating composition. Optionally, the method may further comprise adding a sealant to the substrate prior to adding the mold release composition. Optionally, the method may further comprise applying a second layer to a first layer formed by the coating composition, where the second layer has a composition different than the coating composition of the first layer. For example, the second layer may comprise a plastic, wood, concrete, cement, geotextile, fiberglass composite, carbon fiber composite, and/or synthetic fiber composite. In some examples, the plastic substrate may comprise a polyurethane, an epoxy, and/or a polyurea. In some examples, the synthetic fibers may comprise acetate, acrylic, nylon, aramide, polyolefin, ceramic, and/or polyester fibers.

The methods for applying the coating compositions may comprise spraying. The coating compositions may be applied with a spray gun by air purge spray, mechanical purge spray, atomized air spray, non-atomized air spray, atomized airless spray, non-atomized airless spray, and/or low-pressure static-mix spray, or other means known to those skilled in the art. In some cases, a static mixer may be used during spraying. The static mixer may allow the application pressure to be reduced and improve mixing, which could reduce operating costs and improve product quality.

A spray gun used to apply the coating compositions may have a reciprocator speed of 300-1000 mm/sec (e.g., 350 mm/sec, 500 mm/sec, 700 mm/sec). The reciprocator speed may be 350, 375, 400, 425, 450, 475, 500, 525, 550, 575, 600, 625, 650, 675, 700, 725, 750, 775, 800, 825, 850, 875, 900, 925, 950, 975, or 1000 mm/sec. The coating compositions may be applied at a rate of 4-20 lbs/min (e.g., 5 lbs/min, 10 lbs/min, 15 lbs/min). The application rate may be 4, 5, 6, 7, 8, 9, 10, 11, 12, 13, 14, 15, 16, 17, 18, 19, or 20 lbs/min. The coating compositions may be applied at a pressure of greater than 1500 psi (e.g., 2000 psi, 3000 psi, 3500 psi). The application pressure may be greater than 1500, 1750, 2000, 2250, 2500, 2750, 3000, 3500, or 4000 psi. For a 2K application, the pressure differential may be less than 400 psi (e.g., less than 350 psi, less than 300 psi, or less than 250 psi). The pressure differential may be less than 400, 350, 325, 300, 275, 250, 225, 200, 175, 150, 125, 100, 75, 50, or 25 psi. The coating compositions may be applied at a temperature of greater than 120 °F (e.g., greater than 120 °F, greater than 135 °F, greater than 150 °F). The application temperature may greater than 120 °F, 125 °F, 130 °F, 135 °F, 140 °F, 145 °F, 150 °F, 155 °F, 160 °F, 165 °F, 170 °F, 175 °F, or 180 °F. The coating compositions may be applied at a thickness of up to 500 mil (e.g., up to 20 mil, up to 85 mil, up to 140 mil). The coating compositions may be applied at a thickness of 1, 2, 5, 10, 15, 20, 25, 30, 35, 40, 50, 60, 70, 80, 90, 100, 125, 150, 175, 200, 225, 250, 275, 300, 325, 350, 375, 400, 425, 450, 475, or 500 mil.

The coating compositions described herein may have a tack-free time of less than 250 sec according to ASTM D1640-03 (e.g., 200 sec, 75 sec, or 25 sec). The tack-free time may be less than 250, 225, 200, 175, 150, 125, 100, 75, 50, 25, 20, 15, 10, or 5 sec according to ASTM D1640-03. The coating compositions may have a dry-through time of less than 1100 sec according to ASTM D1640-03 (e.g., 500 sec, 200 sec, or 100 sec). The dry-through time may be less than 1100, 1075, 1050, 1025, 1000, 975, 950, 925, 900, 875, 850, 825, 800, 775, 750, 725, 700, 675, 650, 625, 600, 575, 550, 525, 500, 475, 450, 425, 400, 375, 350, 325, 300, 275, 250, 225, 200, 175, 150, 125, 100, 75, or 50 sec according to ASTM D1640-03.

The coating compositions described herein may have a Shore D hardness value of greater than 65, according to ASTM D2240-15(2021) (e.g., greater than 65, greater than 70, or greater than 75). The Shore D hardness value may be greater than 65, 66, 67, 68, 69, 70, 71, 72, 73, 74, 75, 76, 77, 78, 79, or 80 according to ASTM D2240-15(2021). The Shore D hardness value may be determined at 7 days according to ASTM D2240-15(2021). The coating compositions may have a cycloaliphatic ring equivalent weight greater than 127 meq/100g (e.g., greater than 136 meq/100g, greater than 172 meq/100g, or greater than 254 meq/100g). The cycloaliphatic ring equivalent weight may be greater than 127, 130, 140, 150, 160, 170, 180, 190, 200, 210, 220, 230, 240, 250, 260, 270, 280, 290, 300, 310, 320, 330, 340, 350, 360, or 370 meq/100g. In some cases, the coating composition may have a Shore D hardness value of greater than 65 at 7 days, according to ASTM D2240-15(2021), and a cycloaliphatic ring equivalent weight greater than 127 meq/100g. In some cases, the coating composition may have a Shore D hardness value of greater than 65 at 7 days, according to ASTM D2240-15(2021), and a cycloaliphatic ring equivalent weight greater than 172 meq/100g.

The coating compositions may have a contrast ratio (%CR) value at 10 mil of at least 50, according to ASTM D2805 (e.g., at least 72, at least 83, or at least 94). The %CR value at 10 mil may be at least 50, 55, 60, 65, 70, 75, 80, 85, 90, or 95. The coating compositions may have a stain resistant value of less than 60, according to ANSI Z124.1.2-2005 5.2 (e.g., 60, 50, or 45). The stain resistant value may be less than 60, 59, 58, 57, 56, 55, 54, 53, 52, 51, 50, 49, 48, 47, 46, 45, 44, 43, 42, 41, or 40 according to ANSI Z124.1.2-2005 5.2.

The coating compositions may have an elongation from 4 to 100%, according to ASTM D638-14 (e.g., 10 %, 30 %, or 70 %). The elongation may be 4%, 6 %, 8 %, 10 %, 15 %, 20 %, 25 %, 30 %, 35 %, 40 %, 45 %, 50 %, 55 %, 60 %, 65 %, 70 %, 75 %, 80 %, 85 %, 90 %, 95 %, or 100 %.

The coating compositions may be rust resistant. The coating compositions may be chlorinate resistant. Rust resistance and chlorine resistance tests may be performed by placing 1" diameter chemical spots of a rust solution or chlorine solution on a sample and covering with a watch glass for 24 hours following ASTM D1308-20, Test Method 3.1.1 Spot Test, Covered, Procedure 7.2, at ambient conditions (75+/- 2 degrees F). The sample may be considered to pass if no deterioration, softening, cracking or color changing occurs. A rust solution may be prepared by using tin snips or other appropriate cutting tool to remove the head from a rusty nail and trim the other end as necessary to result in a segment 2.54 cm in length. The piece of rusty nail may be placed on the test panel and using a pipette, 1 mL of deionized water may be transferred directly onto the piece of nail that may be covered by a watch glass for observation.

The coating compositions may have a fire test value of less than 30 sec, excluding the edges, according to ANSI Z124.1.2-2005 5.6. The center of the coating composition samples may not be burned after two 30 second burning intervals. The center of the coating composition samples may self-extinguish if they were burned after two 30 second burning intervals.

Also disclosed herein are methods for repairing an article. The article may comprise a first coating on at least a portion of the article. For example, the article may comprise a polyurea composition, a polyaspartic composition, a polyurethane composition, or combination thereof as a first coating. The first coating may be on a face of the article. The article may have a void or otherwise damaged area in the first coating. A method of repairing an article comprising a first coating may comprise applying to at least a portion of the article the coating composition described herein.

Optionally, the methods for repairing an article may further comprise preparing at least a portion of the article prior to applying the coating composition. In some cases, preparing at least a portion of the article may comprise sanding or scrubbing at least a portion of the article.

In some cases, preparing at least a portion of the article may comprise adding a filler material and/or a base layer comprising a second coating composition to at least a portion of the article. Filler material may comprise a plastic, wood, concrete, cement, geotextile, fiberglass composite, carbon fiber composite, and/or synthetic fiber composite. In some examples, the plastic substrate may comprise a polyurethane, an epoxy, and/or a polyurea. In some examples, the synthetic fibers may comprise acetate, acrylic, nylon, aramide, polyolefin, ceramic, and/or polyester fibers.

The methods for applying the coating compositions for repairing an article may comprise extrusion, spraying, troweling, brushing, and/or rolling. The coating compositions may be applied with a spray gun by air purge spray, mechanical purge spray, atomized air spray, non-atomized air spray, atomized airless spray, non-atomized airless spray, and/or low-pressure static-mix spray, or other means known to those skilled in the art. In some cases, a static mixer may be used during spraying, extrusion, spraying, troweling, brushing, and/or rolling.

The methods for applying the coating compositions for repairing an article may further comprise smoothing and/or polishing the coating composition after the coating composition gels on the article. The coating compositions described herein for repairing an article may have a potlife of greater than 15 min (e.g., 15 min, 20 min, or 25 min). The potlife may be greater than 15, 16, 17, 18, 19, 20, 21, 22, 23, 24, 25, 26, 27, 28, 29, 30, 31, 32, 33, 34, 35, 36, 37, 38, 39, or 40 min.

The methods for applying the coating compositions for repairing an article may further comprise contacting the coating composition with a second solvent after the coating composition gels on the article. The second solvent may comprise an aromatic hydrocarbon, a carboxylic acid ester, or combinations thereof. For example, the solvent may comprise naptha, butyl acetate, xylene, or combinations thereof. The second solvent may be the same as the first solvent in the composition or may be different than the first solvent in the composition. The second solvent may blend a portion of the gelled coating composition with a portion of article to reduce visual contrast between the gelled coating composition and the article.

The substrate can comprise a vehicle, a structure, marine components, automotive body parts, aerospace components, wind turbine components, roofing structure components, and consumer goods. An article may comprise a substrate comprising the coating composition described herein.

"Consumer goods" as used herein refers to a bathtub, spa, swimming pool, vanity, sink, or other item that is exposed to a corrosive environment or harsh environmental conditions. "Vehicle" refers to in its broadest sense all types of vehicles, such as but not limited to cars, trucks, buses, tractors, harvesters, heavy duty equipment, vans, golf carts, motorcycles, bicycles, railcars, airplanes, helicopters, boats of all sizes and the like.

As used herein, unless otherwise expressly specified, all numbers such as those expressing values, ranges, amounts or percentages may be read as if prefaced by the word "about", even if the term does not expressly appear. Any numerical range recited herein is intended to include all subranges subsumed therein. When ranges are given, any endpoints of those ranges and/or numbers within those ranges can be combined with the scope of the present disclosure. Notwithstanding that the numerical ranges and parameters setting forth the broad scope of the disclosure are approximations, numerical values set forth in the specific examples are reported as precisely as possible. Any numerical value, however, inherently contains certain errors necessarily resulting from the standard variation found in their respective testing measurements. When ranges are given, any endpoints of those ranges and/or numbers within those ranges can be combined within the scope of the present disclosure. "Including" and like terms mean "including but not limited to". The word "comprising" and forms of the word "comprising" as used in this description and in the claims do not limit the disclosure claimed to exclude any variants or additions.

As used herein, the terms "on" and "applied on/over" mean formed or provided on but not necessarily in contact with the surface. Each of the characteristics and examples described above and below, and combinations thereof, may be said to be encompassed by the present disclosure.

As used herein, the meaning of "a," "an," and "the" includes singular and plural references unless the context clearly dictates otherwise.

As used herein, the terms "disclosure," "the disclosure," "this disclosure" and "the present disclosure" are intended to refer broadly to all of the subject matter of this patent application and the claims below. Statements containing these terms should be understood not to limit the subject matter described herein or to limit the meaning or scope of the patent claims below. The terms "comprising," "having," "including," and "containing" are to be construed as open-ended terms (i.e., meaning "including, but not limited to") unless otherwise noted.

Although the disclosure has been described in terms of "comprising", "consisting essentially of" or "consisting of" are also within the scope of the present disclosure. In this context, "consisting essentially of" means that any additional components will not materially affect the viscosity or other properties of the composition.

The following working examples are intended to further describe the disclosure. It is understood that the disclosure described in this specification is not necessarily limited to the examples described in this section. Components that are mentioned elsewhere in the specification as suitable alternative materials for use in the disclosure, but which are not demonstrated in the working examples below, are expected to provide results comparable to their demonstrated counterparts.

### EXAMPLES

Working Examples of coating compositions described herein were prepared and evaluated for performance.

### Example 1

Desmodur N 3300^{™} A and propylene carbonate were transferred to a container equipped with a Cowles blade. The mixture was mixed in the container for 10 min.

### Example 2

The B-pack (amine) samples were prepared according to the compositions in Table 1. The B-pack (amine) samples were prepared by first combining 50 % of the amine/hydroxy functional compounds with all additives, excluding pigments, where applicable. Under agitation, the pigment, where applicable, was added to the resin blend and ground with a horizontal mill until Hegman > 5, preferably > 7.5 (7.5 is a finer particle size than 5). Upon completion of the grind phase, any remaining material listed in the composition table were added, where applicable, under low shear and mixed for 10 min with a Cowles blade to complete the B-pack formulation. Samples were shaken for 10 min prior to all application work to ensure a homogenous sample.

**Table 1**

| **Part B (Amine/hydroxyl compounds), Weight Ratio** | Ex 1 | Ex 2 | Ex 3 | Ex 4 | Ex 5 | Ex 6 |
|---|---|---|---|---|---|---|
| Jeffamine SD-2001 | 8.14 | 0.00 | 3.69 | 9.09 | 0.00 | 0.00 |
| Jeffamine T5000 | 2.18 | 0.00 | 22.50 | 24.37 | 24.18 | 22.45 |
| Desmophen NH 1220 | 5.68 | 44.30 | 0.00 | 43.54 | 0.00 | 11.52 |
| HXA CE 425 | 12.60 | 13.74 | 42.17 | 14.08 | 13.97 | 42.08 |
| Desmophen NH 1420 | 50.44 | 33.26 | 9.99 | 0.00 | 49.02 | 0.00 |
| Quadrol PM | 0.00 | 0.00 | 0.00 | 0.00 | 3.98 | 2.36 |
| Pigment / Additives Blend | 18.45 | 7.66 | 19.04 | 7.84 | 7.79 | 19.00 |
| Reactive Stain Resistance Additive | 2.52 | 1.04 | 2.60 | 1.07 | 1.06 | 2.59 |
| Total | 100.00 | 100.00 | 100.00 | 100.00 | 100.0 | 100.00 |

| **Part A (Isocyanate), Weight Ratio** | | | | | | |
|---|---|---|---|---|---|---|
| N3300 mixture from Example 1 | 117.48 | 117.48 | 117.48 | 117.48 | 117.48 | 117.48 |
| N3900 | - | - | - | - | - | - |
| N3300 | - | - | - | - | - | - |
| NCO:Amine equivalent ratio (NCO index) | 1.05 | 1.12 | 1.05 | 1.10 | 1.30 | 1.05 |

**Table 1, cont.**

| **Part B (Amine/hydroxyl compounds), Weight Ratio** | Ex 7 | Ex 8 | Ex 9 | Ex 10 | Ex 11 | Ex 12 |
|---|---|---|---|---|---|---|
| Jeffamine SD-2001 | 0.00 | 8.17 | 0.00 | 0.00 | 0.00 | 0.00 |
| Jeffamine T5000 | 0.00 | 4.53 | 22.45 | 24.18 | 24.18 | 0.00 |
| Desmophen NH1220 | 40.64 | 0.00 | 11.52 | 0.00 | 0.00 | 44.30 |
| HXA CE 425 | 24.18 | 15.62 | 42.08 | 13.97 | 13.97 | 13.74 |
| Desmophen NH1420 | 14.20 | 50.63 | 0.00 | 49.02 | 49.02 | 33.26 |
| Quadrol PM | 0.00 | 0.00 | 2.36 | 3.98 | 3.98 | 0.00 |
| Pigment / Additives Blend | 18.47 | 18.52 | 19.00 | 7.79 | 7.79 | 7.66 |
| Reactive Stain Resistance Additive | 2.52 | 2.53 | 2.59 | 1.06 | 1.06 | 1.04 |
| Total | 100.00 | 100.00 | 100.00 | 100.00 | 100.00 | 100.00 |

| **Part A (Isocyanate), Weight Ratio** | | | | | | |
|---|---|---|---|---|---|---|
| N3300 mixture from Example 1 | 117.48 | 117.48 | 117.48 | 117.48 | 117.48 | 117.48 |
| N3900 | - | - | - | - | - | - |
| N3300 | - | - | - | - | - | - |
| NCO:Amine equivalent ratio (NCO index) | 1.05 | 1.05 | 1.05 | 1.30 | 1.30 | 1.12 |

**Table 1, cont.**

| **Part B (Amine/hydroxyl compounds), Weight Ratio** | Ex 13 | Ex 14 | Ex 15 | Ex 16 | Ex 17 | Ex 18 |
|---|---|---|---|---|---|---|
| Jeffamine SD-2001 | 0.00 | 8.17 | 9.09 | 9.09 | 8.14 | 8.14 |
| Jeffamine T5000 | 0.00 | 4.53 | 24.37 | 24.37 | 2.18 | 2.18 |
| Desmophen NH1220 | 0.00 | 0.00 | 43.54 | 43.54 | 5.68 | 5.68 |
| HXA CE 425 | 31.89 | 15.62 | 14.08 | 14.08 | 12.60 | 12.60 |
| Desmophen NH1420 | 47.01 | 50.63 | 0.00 | 0.00 | 50.44 | 50.44 |
| Quadrol PM | 0.00 | 0.00 | 0.00 | 0.00 | 0.00 | 0.00 |
| Pigment / Additives Blend | 18.57 | 18.52 | 7.84 | 7.84 | 18.45 | 18.45 |
| Reactive Stain Resistance Additive | 2.53 | 2.53 | 1.07 | 1.07 | 2.52 | 2.52 |
| Total | 100.00 | 100.00 | 100.00 | 100.00 | 100.00 | 100.00 |

| **Part A (Isocyanate), Weight Ratio** | | | | | | |
|---|---|---|---|---|---|---|
| N3300 mixture from Example 1 | 117.48 | 117.48 | 117.48 | 117.48 | - | - |
| N3900 | - | - | - | - | 114.79 | - |
| N3300 | - | - | - | - | - | 116.95 |
| NCO:Amine equivalent ratio (NCO index) | 1.05 | 1.05 | 1.10 | 1.10 | 1.30 | 1.23 |

The "Pigment / Additives Blend" included one or more weather additives in an amount from 0.3 - 2.5 wt. %; TiO₂ from 5 to 30 wt. %; one or more pigments from 1 to 8 wt. %; one or more surface active additives from 0.04 - 3 wt. %; and one or more alkoxysilane additives up to 2 wt. %, based on the total weight of Part B. The total amount of pigment excluded TiO₂ for film properties and rheology control. Quadrol PM is available from BASF. HXA CE 425 is available from BASF/Hanson Group LLC.

### Example 3

Samples were prepared according to the compositions in Table 2. The B-pack (amine) samples were prepared by combining the amine/hydroxy functional compound with the reactive stain resistance additive. The molecular weight and equivalent weight of the reactive stain resistance additives are listed in Table 3.

**Table 2**

| **Part B (Amine/hydroxyl compounds), Weight Ratio** | Ex 19 | Ex 20 | Ex 21 | Ex 22 | Ex 23 |
|---|---|---|---|---|---|
| PPG Polyurea Gelcoat BDL95663G (PPG Industries) | 100 | 99 | 99 | 99 | 99 |
| Silmer OHT A0 | - | 1 | - | - | - |
| Silmer OH Di-10 | - | - | 1 | - | - |
| Silmer OHT Di-10 | - | - | - | 1 | - |
| Silmer OHT Di-50 | - | - | - | - | 1 |
| Silmer OHT Di-1000 | - | - | - | - | - |
| Silmer NH C50 | - | - | - | - | - |
| Total | 100 | 100 | 100 | 100 | 100 |

| **Part A (Isocyanate), Volume Ratio to Part B** | | | | | |
|---|---|---|---|---|---|
| N3300 mixture from Example 1 | 1:1 | 1:1 | 1:1 | 1:1 | 1:1 |
| Stain Resistance, ANSI Z124.1.2-2005 5.2 | 60 | 62 | 56 | 52 | 44 |
| Fire test value < 30 sec, ANSI Z124.1.2-2005 5.6 | Pass | Pass | Pass | Pass | Pass |
| %CR value at 10 mil of at least 50, ASTM D2805 | Pass | Pass | Pass | Pass | Pass |
| 7 day Shore D hardness value > 65 | Pass | Pass | Pass | Pass | Pass |
| Dry-through time < 1100 sec, ASTM D1640-03 | Pass | Pass | Pass | Pass | Pass |
| Tack-free time < 250 sec, ASTM D1640-03 | Pass | Pass | Pass | Pass | Pass |

**Table 2, Cont.**

| **Part B (Amine/hydroxyl compounds), Weight Ratio** | Ex 24 | Ex 25 | Ex 26 | Ex 27 | Ex 28 |
|---|---|---|---|---|---|
| PPG Polyurea Gelcoat BDL95663G (PPG Industries) | 99 | 99 | 99.4 | 98 | 95 |
| Silmer OHT A0 | - | - | - | - | - |
| Silmer OH Di-10 | - | - | - | - | - |
| Silmer OHT Di-10 | - | - | - | - | - |
| Silmer OHT Di-50 | - | - | 0.6 | 2 | 5 |
| Silmer OHT Di-1000 | 1 | - | - | - | - |
| Silmer NH C50 | - | 1 | - | - | - |
| Total | 100 | 100 | 100 | 100 | 100 |

| **Part A (Isocyanate), Volume Ratio to Part B** | | | | | |
|---|---|---|---|---|---|
| N3300 mixture from Example 1 | 1:1 | 1:1 | 1:1 | 1:1 | 1:1 |
| Stain Resistance, ANSI Z124.1.2-2005 5.2 | 45 | 52 | 46 | 47 | 54 |
| Fire test value < 30 sec, ANSI Z124.1.2-2005 5.6 | Pass | Pass | Pass | Pass | Pass |
| %CR value at 10 mil of at least 50, ASTM D2805 | Pass | Pass | Pass | Pass | Pass |
| 7 day Shore D hardness value > 65 | Pass | Pass | Pass | Pass | Pass |
| Dry-through time < 1100 sec, ASTM D1640-03 | Pass | Pass | Pass | Pass | Pass |
| Tack-free time < 250 sec, ASTM D1640-03 | Pass | Pass | Pass | Pass | Pass |

**Table 3**

| Reactive Stain Resistance Additive | Mol. Wt. (g/mol) | Equiv. Wt. (g/mol) |
|---|---|---|
| Silmer OHT A0 | 370 | 185 |
| Silmer OH Di-10 | 1000 | 500 |
| Silmer OHT Di-10 | 1400 | 350 |
| Silmer OHT Di-50 | 4500 | 1125 |
| Silmer OHT Di-1000 | 8400 | 2100 |
| Silmer NH C50 | 11600 | 3867 |

SILMER^{®} products are available from Siltech Corporation, Toronto, Ontario, Canada. According to Siltech: Silmer OHT A0 is a hydroxyalkyl modified silicone with two-functional hydroxyl attached to a silicone backbone; Silmer OHT Di-10, Silmer OHT Di-50, Silmer OHT Di-100 are tetra-functional hydroxyl silicones; Silmer OH Di-10 is a linear di-functional hydroxyl-terminated silicone pre-polymer; and Silmer NH C50 is a tri-functional silicone with amine groups.

### Example 4

The part A and part B compositions from Tables 1 and 2 were sprayed via a plural component spray system, such as Graco E-10 HP and HXP2 machines equipped with a mixing gun, such as Graco^{®} AP Fusion, MP Fusion and AP Proconnect guns. The plural system was set to the spray parameters listed in Table 4. Subsequent layers were applied to allow for testing. Subsequent layers can be any type of coating that can structurally support the gelcoat for different testing, such as DuraBull^{™} bed liner product available from PPG. The molded product was peeled off from the mold after it had completely cured.

**Table 4**

| Spray parameters | Min | Max | Avg |
|---|---|---|---|
| Spray speed (mm/sec) | 350 | 900 | 625 |
| Flow rate (lbs/min) | 4.6 | 12.4 | 8.5 |
| Spray thickness (in) | 0.02 | 0.03 | 0.025 |
| Static Pressure (psi) | 1500 | 3000 | 2250 |
| Spray Temperature (F) | 120 | 160 | 140 |

### Illustrative Embodiments of Suitable Compositions and Methods

As used below, any reference to compositions, articles, or methods is understood as a reference to each of those compositions, articles, or methods disjunctively (e.g., "Illustrative embodiment 1-4 is understood as illustrative embodiment 1, 2, 3, or 4.").

Illustrative embodiment 1 is a coating composition comprising: an isocyanate component; an amine-functional resin comprising an aspartic acid ester; a reactive silicone component having a molecular weight of at least of 500; and TiO₂ in an amount of at least 5 wt. %.

Illustrative embodiment 2 is the coating composition of any preceding or subsequent illustrative embodiment, further comprising a reactive diluent.

Illustrative embodiment 3 is the coating composition of any preceding or subsequent illustrative embodiment, wherein the reactive silicone component is up to 7 wt. %.

Illustrative embodiment 4 is the coating composition of any preceding or subsequent illustrative embodiment, further comprising a total of up to 3 wt. % of non-reactive surface additives.

Illustrative embodiment 5 is the coating composition of any preceding or subsequent illustrative embodiment, further comprising a polysiloxane, a UV absorber, a hindered amine light stabilizer (HALS), an inorganic filler, an organic filler, a reinforcing agent, a pigment, a flame retardant, a biocide, an antimicrobial, or combinations thereof.

Illustrative embodiment 6 is the coating composition of any preceding or subsequent illustrative embodiment, wherein an equivalent weight ratio of the isocyanate component to active hydrogen of the amine-functional resin ranges from 0.85:1 to 1.4:1.

Illustrative embodiment 7 is the coating composition of any preceding or subsequent illustrative embodiment, wherein the amine-functional resin further comprises a primary and/or secondary amine.

Illustrative embodiment 8 is the coating composition of any preceding or subsequent illustrative embodiment, wherein the amine-functional resin further comprises an aromatic amine or an aliphatic amine.

Illustrative embodiment 9 is the coating composition of any preceding or subsequent illustrative embodiment, wherein the isocyanate component comprises a prepolymer formed from isophorone diisocyanate and a polyether polyol and/or polyetheramine.

Illustrative embodiment 10 is the coating composition of any preceding or subsequent illustrative embodiment, further comprising a catalyst comprising zinc, manganese, zirconium, titanium, cobalt, iron, lead, bismuth, or tin.

Illustrative embodiment 11 is a substrate comprising the coating composition the coating composition of any preceding illustrative embodiment.

Illustrative embodiment 12 is an article comprising the substrate of any preceding illustrative embodiment.

Illustrative embodiment 13 is an article comprising a bathtub, a shower enclosure, a swimming pool, a spa, a boat, a turbine blade, a precast concrete component, or a prefabricated construction component.

Illustrative embodiment 14 is a method comprising applying the coating composition of any preceding or subsequent illustrative embodiment to at least a portion of a substrate.

Illustrative embodiment 15 is the method of any preceding or subsequent illustrative embodiment, further comprising adding a mold release composition to the substrate prior to applying the coating composition.

Illustrative embodiment 16 is the method of any preceding or subsequent illustrative embodiment, further comprising applying a second layer to a first layer formed by the coating composition, wherein the second layer has a composition different than the coating composition of the first layer.

Illustrative embodiment 17 is the method of any preceding or subsequent illustrative embodiment, wherein the coating composition is applied with a spray gun by air purge spray, mechanical purge spray, atomized air spray, non-atomized air spray, atomized airless spray, non-atomized airless spray, air-assisted airless spray, and/or low pressure static-mix spray.

Illustrative embodiment 18 is the method of any preceding or subsequent illustrative embodiment, wherein the spray gun has a reciprocator speed of 300-1000 mm/sec.

Illustrative embodiment 19 is the method of any preceding or subsequent illustrative embodiment, wherein the coating composition is applied at a rate of 4-20 lbs/min.

Illustrative embodiment 20 is the method of any preceding or subsequent illustrative embodiment, wherein the coating composition has a tack-free time of less than 250 sec according to ASTM D1640-03.

Illustrative embodiment 21 is the method of any preceding or subsequent illustrative embodiment, wherein the coating composition has a dry-through time of less than 1100 sec according to ASTM D1640-03.

Illustrative embodiment 22 is the method of any preceding or subsequent illustrative embodiment, wherein the coating composition has a Shore D hardness value of greater than 65, according to ASTM D2240-15(2021), and wherein the coating composition has a cycloaliphatic ring equivalent weight greater than 127 meq/100g.

Illustrative embodiment 23 is the method of any preceding or subsequent illustrative embodiment, wherein the coating composition has a %CR value at 10 mil of at least 50, according to ASTM D2805.

Illustrative embodiment 24 is the method of any preceding or subsequent illustrative embodiment, wherein the coating composition has a elongation from 4 to 100%, according to ASTM D638-14.

Illustrative embodiment 25 is the method of any preceding or subsequent illustrative embodiment, wherein the coating composition has a fire test value of less than 30 seconds, excluding the edges, according to ANSI Z124.1.2-2005 5.6.

Illustrative embodiment 26 is the method of any preceding or subsequent illustrative embodiment, wherein the coating composition has a stain resistant value of less than 60, according to ANSI Z124.1.2-2005 5.2.

Illustrative embodiment 27 is the method of any preceding or subsequent illustrative embodiment, wherein the coating composition is rust resistant.

Illustrative embodiment 28 is the method of any preceding or subsequent illustrative embodiment, wherein the coating composition is chlorinate resistant.

Illustrative embodiment 29 is the method of any preceding illustrative embodiment, wherein the second layer comprises plastic, wood, geotextile, concrete, cement, fiberglass composite, carbon fiber composite, and/or synthetic fiber composite.

Illustrative embodiment 30 is a coating composition comprising: an isocyanate component; an amine-functional resin comprising an aspartic amine; a reactive silicone component having a molecular weight of at least of 500; TiO₂; a cure retardant in an amount of at least 5 wt. %; and a solvent in an amount of up to 20 wt. %.

Illustrative embodiment 31 is the coating composition of any preceding or subsequent illustrative embodiment, further comprising a reactive diluent.

Illustrative embodiment 32 is the coating composition of any preceding or subsequent illustrative embodiment, wherein the cure retardant comprises a ketone, a pyrazole, a polyol, or combinations thereof.

Illustrative embodiment 33 is the coating composition of any preceding or subsequent illustrative embodiment, wherein the cure retardant comprises acetone, acetylacetone, 3,5-dimethylpyrazole, or combinations thereof.

Illustrative embodiment 34 is the coating composition of any preceding or subsequent illustrative embodiment, wherein the cure retardant comprises tetra (2-hydroxypropyl) ethylenediamine, polytetramethylene ether glycol or combinations thereof.

Illustrative embodiment 35 is the coating composition of any preceding or subsequent illustrative embodiment, wherein the solvent comprises an aromatic hydrocarbon, a carboxylic acid ester, or combinations thereof.

Illustrative embodiment 36 is the coating composition of any preceding or subsequent illustrative embodiment, wherein the solvent comprises naptha, xylene, butyl acetate, or combinations thereof.

Illustrative embodiment 37 is the coating composition of any preceding or subsequent illustrative embodiment, wherein the composition has a potlife of greater than 15 minutes.

Illustrative embodiment 38 is the coating composition of any preceding illustrative embodiment, wherein the composition has a potlife of greater than 30 minutes.

Illustrative embodiment 39 is a method for repairing an article comprising a first coating, the method comprising applying to at least a portion of the article the coating composition of any preceding illustrative embodiment.

Illustrative embodiment 40 is the method of any preceding or subsequent illustrative embodiment, wherein the first coating comprises a polyurea composition, a polyaspartic composition, a polyurethane composition, or combinations thereof.

Illustrative embodiment 41 is the method of any preceding or subsequent illustrative embodiment, further comprising preparing at least the portion of the article prior to applying the coating composition.

Illustrative embodiment 42 is the method of any preceding or subsequent illustrative embodiment, wherein preparing at least the portion of the article comprises sanding or scrubbing at least a portion of the article.

Illustrative embodiment 43 is the method of any preceding or subsequent illustrative embodiment, wherein preparing at least the portion of the article comprises adding a filler material and/or a base layer comprising a second coating composition to at least a portion of the article.

Illustrative embodiment 44 is the method of any preceding or subsequent illustrative embodiment, wherein applying the coating composition comprises extrusion, spraying, troweling, brushing, and/or rolling.

Illustrative embodiment 45 is the method of any preceding or subsequent illustrative embodiment, wherein spraying comprises air purge spray, mechanical purge spray, atomized air spray, non-atomized air spray, atomized airless spray, non-atomized airless spray, air-assisted airless spray, and/or low-pressure static-mix spray.

Illustrative embodiment 46 is the method of any preceding or subsequent illustrative embodiment, wherein applying further comprises using a static mixer.

Illustrative embodiment 47 is the method of any preceding or subsequent illustrative embodiment, further comprising smoothing and/or polishing the coating composition after the coating composition gels on the article.

Illustrative embodiment 48 is the method of any preceding or subsequent illustrative embodiment, wherein the coating composition has a potlife greater than 15 minutes.

Illustrative embodiment 49 is the method of any preceding or subsequent illustrative embodiment, wherein the coating composition is applied to a void or damaged area of the first coating of the article.

Illustrative embodiment 50 is the method of any preceding or subsequent illustrative embodiment, wherein the article comprises a plastic, wood, concrete, cement, geotextile, fiberglass composite, carbon fiber composite, and/or synthetic fiber composite.

Illustrative embodiment 51 is the method of any preceding or subsequent illustrative embodiment, further comprising contacting the coating composition with a second solvent after the coating composition gels on the article.

Illustrative embodiment 52 is the method of any preceding or subsequent illustrative embodiment, wherein the second solvent comprises an aromatic hydrocarbon, a carboxylic acid ester, or combinations thereof.

Illustrative embodiment 53 is the method of any preceding illustrative embodiment, wherein the second solvent blends a portion of the gelled coating composition with a portion of article to reduce visual contrast between the gelled coating composition and the article.

Illustrative embodiment 54 is a kit comprising: a first part comprising an isocyanate component; and a second part comprising: an amine-functional resin comprising an aspartic amine; a reactive silicone component having a molecular weight of at least of 500; TiO₂; and a cure retardant.

Illustrative embodiment 55 is the kit of any preceding illustrative embodiment, further comprising a solvent.

Illustrative embodiment 56 is the kit comprising: a first part comprising: an isocyanate component; a reactive silicone component having a molecular weight of at least of 500; TiO₂; and a cure retardant; and a second part comprising an amine-functional resin comprising an aspartic amine.

Illustrative embodiment 57 is the kit of any preceding illustrative embodiment, further comprising a solvent.

The invention includes the following aspects:
Aspect 1. A coating composition comprising:
   an isocyanate component;
   an amine-functional resin comprising an aspartic acid ester;
   a reactive silicone component having a molecular weight of at least of 500; and
   TiO₂ in an amount of at least 5 wt. %.
Aspect 2. The coating composition of Aspect 1, further comprising a reactive diluent.
Aspect 3. The coating composition of Aspect 1 or 2, wherein the reactive silicone component is up to 7 wt. %.
Aspect 4. The coating composition of any one of Aspects 1-3, further comprising a total of up to 3 wt. % of non-reactive surface additives.
Aspect 5. The coating composition of any one of Aspects 1-4, further comprising a polysiloxane, a UV absorber, a hindered amine light stabilizer (HALS), an inorganic filler, an organic filler, a reinforcing agent, a pigment, a flame retardant, a biocide, an antimicrobial, or combinations thereof.
Aspect 6. The coating composition of any one of Aspects 1-5, wherein an equivalent weight ratio of the isocyanate component to active hydrogen of the amine-functional resin ranges from 0.85:1 to 1.4:1.
Aspect 7. The coating composition of any one of Aspects 1-6, wherein the amine-functional resin further comprises a primary and/or secondary amine.
Aspect 8. The coating composition of any one of Aspects 1-7, wherein the amine-functional resin further comprises an aromatic amine or an aliphatic amine.
Aspect 9. The coating composition of any one of Aspects 1-8, wherein the isocyanate component comprises a prepolymer formed from isophorone diisocyanate and a polyether polyol and/or polyetheramine.
Aspect 10. The coating composition of any one of Aspects 1-9, further comprising a catalyst comprising zinc, manganese, zirconium, titanium, cobalt, iron, lead, bismuth, or tin.
Aspect 11. A substrate comprising the coating composition of any one of Aspects 1-10.
Aspect 12. An article comprising the substrate of Aspect 11.
Aspect 13. The article of Aspect 12 comprising a bathtub, a shower enclosure, a swimming pool, a spa, a boat, a turbine blade, a precast concrete component, or a prefabricated construction component.
Aspect 14. A method comprising applying to at least a portion of a substrate the coating composition according to any one of Aspects 1-10.
Aspect 15. The method of Aspect 14, further comprising adding a mold release composition to the substrate prior to applying the coating composition.
Aspect 16. The method of Aspect 14 or 15, further comprising applying a second layer to a first layer formed by the coating composition, wherein the second layer has a composition different than the coating composition of the first layer.
Aspect 17. The method of any one of Aspects 14-16, wherein the coating composition is applied with a spray gun by air purge spray, mechanical purge spray, atomized air spray, non-atomized air spray, atomized airless spray, non-atomized airless spray, air-assisted airless spray, and/or low pressure static-mix spray.
Aspect 18. The method of Aspect17, wherein the spray gun has a reciprocator speed of 300-1000 mm/sec.
Aspect 19. The method of Aspect 17 or 18, wherein the coating composition is applied at a rate of 4-20 lbs/min.
Aspect 20. The method of any one of Aspects 14-19, wherein the coating composition has a tack-free time of less than 250 sec according to ASTM D1640-03.
Aspect 21. The method of any one of Aspects 14-20, wherein the coating composition has a dry-through time of less than 1100 sec according to ASTM D1640-03.
Aspect 22. The method of any one of Aspects 14-21, wherein the coating composition has a Shore D hardness value of greater than 65, according to ASTM D2240-15(2021), and wherein the coating composition has a cycloaliphatic ring equivalent weight greater than 127 meq/100g.
Aspect 23. The method of any one of Aspects 14-22, wherein the coating composition has a contrast ratio (%CR) value at 10 mil of at least 50, according to ASTM D2805.
Aspect 24. The method of any one of Aspects 14-23, wherein the coating composition has a elongation from 4 to 100%, according to ASTM D638-14.
Aspect 25. The method of any one of Aspects 14-24, wherein the coating composition has a fire test value of less than 30 seconds, excluding the edges, according to ANSI Z124.1.2-2005 5.6.
Aspect 26. The method of any one of Aspects 14-25, wherein the coating composition has a stain resistant value of less than 60, according to ANSI Z124.1.2-2005 5.2.
Aspect 27. The method any one of Aspects 14-26, wherein the coating composition is rust resistant.
Aspect 28. The method of any one of Aspects 14-27, wherein the coating composition is chlorinate resistant.
Aspect 29. The method of any one of Aspects 14-28, wherein the second layer comprises plastic, wood, geotextile, concrete, cement, fiberglass composite, carbon fiber composite, and/or synthetic fiber composite.
Aspect 30. A coating composition comprising:
   an isocyanate component;
   an amine-functional resin comprising an aspartic amine;
   a reactive silicone component having a molecular weight of at least of 500; TiO₂;
   a cure retardant in an amount of at least 5 wt. %; and
   a solvent in an amount of up to 20 wt. %.
Aspect 31. The coating composition of Aspect 30, further comprising a reactive diluent.
Aspect 32. The coating composition of Aspect 30 or 31, wherein the cure retardant comprises a ketone, a pyrazole, a polyol, or combinations thereof.
Aspect 33. The coating composition of any one of Aspects 30-32, wherein the cure retardant comprises acetone, acetylacetone, 3,5-dimethylpyrazole, or combinations thereof.
Aspect 34. The coating composition of any one of Aspects 30-32, wherein the cure retardant comprises tetra (2-hydroxypropyl) ethylenediamine, polytetramethylene ether glycol or combinations thereof.
Aspect 35. The coating composition of any one of Aspects 30-34, wherein the solvent comprises an aromatic hydrocarbon, a carboxylic acid ester, or combinations thereof.
Aspect 36. The coating composition of any one of Aspects 30-34, wherein the solvent comprises naptha, xylene, butyl acetate, or combinations thereof.
Aspect 37. The coating composition of any one of Aspects 30-36, wherein the composition has a potlife of greater than 15 minutes.
Aspect 38. The coating composition of any one of Aspects 30-36, wherein the composition has a potlife of greater than 30 minutes.
Aspect 39. A method for repairing an article comprising a first coating, the method comprising applying to at least a portion of the article the coating composition according to any one of Aspects 1-10 or 30-38.
Aspect 40. The method of Aspect 39, wherein the first coating comprises a polyurea composition, a polyaspartic composition, a polyurethane composition, or combinations thereof.
Aspect 41. The method of Aspect 39 or 40, further comprising preparing at least the portion of the article prior to applying the coating composition.
Aspect 42. The method of Aspect 41, wherein preparing at least the portion of the article comprises sanding or scrubbing at least a portion of the article.
Aspect 43. The method of Aspect 41 or 42, wherein preparing at least the portion of the article comprises adding a filler material and/or a base layer comprising a second coating composition to at least a portion of the article.
Aspect 44. The method any one of Aspects 39-43, wherein applying the coating composition comprises extrusion, spraying, troweling, brushing, and/or rolling.
Aspect 45. The method of Aspect 44, wherein spraying comprises air purge spray, mechanical purge spray, atomized air spray, non-atomized air spray, atomized airless spray, non-atomized airless spray, air-assisted airless spray, and/or low-pressure static-mix spray.
Aspect 46. The method of Aspect 44, wherein applying further comprises using a static mixer.
Aspect 47. The method any one of Aspects 39-46, further comprising smoothing and/or polishing the coating composition after the coating composition gels on the article.
Aspect 48. The method any one of Aspects 39-47, wherein the coating composition has a potlife greater than 15 minutes.
Aspect 49. The method of any one of Aspects 39-48, wherein the coating composition is applied to a void or damaged area of the first coating of the article.
Aspect 50. The method of any one of Aspects 39-49, wherein the article comprises a plastic, wood, concrete, cement, geotextile, fiberglass composite, carbon fiber composite, and/or synthetic fiber composite.
Aspect 51. The method any one of Aspects 39-50, further comprising contacting the coating composition with a second solvent after the coating composition gels on the article.
Aspect 52. The method of Aspect 51, wherein the second solvent comprises an aromatic hydrocarbon, a carboxylic acid ester, or combinations thereof.
Aspect 53. The method of Aspect 51 or 52, wherein the second solvent blends a portion of the gelled coating composition with a portion of article to reduce visual contrast between the gelled coating composition and the article.
Aspect 54. A kit comprising:
   a first part comprising an isocyanate component; and
   a second part comprising:
      an amine-functional resin comprising an aspartic amine;
      a reactive silicone component having a molecular weight of at least of 500; TiO₂; and
      a cure retardant.
Aspect 55. The kit of Aspect 54, further comprising a solvent.
Aspect 56. A kit comprising:
   a first part comprising:
      an isocyanate component;
      a reactive silicone component having a molecular weight of at least of 500; TiO₂; and
      a cure retardant; and
   a second part comprising an amine-functional resin comprising an aspartic amine.
Aspect 57. The kit of Aspect 56, further comprising a solvent.

Whereas various examples of the disclosure have been described in fulfillment of the various objectives of the disclosure, it should be recognized that these examples are merely illustrative of the principles of the present disclosure. Numerous modifications and adaptations thereof will be readily apparent to those skilled in the art without departing from the spirit and scope of the present disclosure as defined in the following claims.

## Claims

1. A coating composition comprising:
an isocyanate component;
an amine-functional resin comprising an aspartic amine;
a reactive silicone component having a molecular weight of at least of 500; TiO₂;
a cure retardant in an amount of at least 5 wt. %; and
a solvent in an amount of up to 20 wt. %.

2. The coating composition of claim 1, further comprising a reactive diluent.

3. The coating composition of claim 1 or 2, wherein the cure retardant comprises a ketone, a pyrazole, a polyol, or combinations thereof.

4. The coating composition of any one of claims 1-3, wherein the cure retardant comprises acetone, acetylacetone, 3,5-dimethylpyrazole, or combinations thereof.

5. The coating composition of any one of claims 1-3, wherein the cure retardant comprises tetra (2-hydroxypropyl) ethylenediamine, polytetramethylene ether glycol or combinations thereof.

6. The coating composition of any one of claims 1-5, wherein the solvent comprises an aromatic hydrocarbon, a carboxylic acid ester, or combinations thereof.

7. The coating composition of any one of claims 1-5, wherein the solvent comprises naptha, xylene, butyl acetate, or combinations thereof.

8. The coating composition of any one of claims 1-7, wherein the composition has a potlife of greater than 15 minutes.

9. The coating composition of any one of claims 1-7, wherein the composition has a potlife of greater than 30 minutes.

10. A method for repairing an article comprising a first coating, the method comprising applying to at least a portion of the article the coating composition according to any one of claims 1-9, preferably wherein the coating composition is applied to a void or damaged area of the first coating of the article.

11. The method of claim 10, wherein the first coating comprises a polyurea composition, a polyaspartic composition, a polyurethane composition, or combinations thereof.

12. The method of any one of claims 10-11, wherein the article comprises a plastic, wood, concrete, cement, geotextile, fiberglass composite, carbon fiber composite, and/or synthetic fiber composite.

13. The method any one of claims 10-12, further comprising contacting the coating composition with a second solvent after the coating composition gels on the article.

14. The method of claim 53, wherein the second solvent comprises an aromatic hydrocarbon, a carboxylic acid ester, or combinations thereof.

15. The method of claim 13 or 14, wherein the second solvent blends a portion of the gelled coating composition with a portion of article to reduce visual contrast between the gelled coating composition and the article.
